# EUROPÄISCHE PATENTSCHRIFT

(11) **EP 3 328 730 B1**
(45) Veröffentlichungstag und Bekanntmachung des Hinweises auf die Patenterteilung: **13.04.2022**
(21) Anmeldenummer: 16735821.7
(22) Anmeldetag: 01.07.2016
(51) Int. Cl.: B64C 25/10

(54) **STREBE FÜR DAS FAHRWERK EINES FLUGZEUGS**
STRUT FOR THE LANDING GEAR OF AN AIRCRAFT
MONTANT DESTINÉ AU TRAIN D'ATTERRISSAGE D'UN AÉRONEF

(30) Priorität: 29.07.2015 DE 202015005362 U
(43) Veröffentlichungstag der Anmeldung: 06.06.2018
(73) Patentinhaber: Liebherr-Aerospace Lindenberg GmbH, 88161 Lindenberg (DE)
(72) Erfinder: MEYER, Jörg, 88255 Baienfurt (DE); STRAUB, Anton, 78462 Konstanz (DE); VERGOUWEN, Peet, 5741 SM Beek en Donk (NL)
(74) Vertreter: Laufhütte, Dieter
(86) Internationale Anmeldenummer: PCT/EP2016/001130
(87) Internationale Veröffentlichungsnummer: WO 2017/016633

(56) Entgegenhaltungen:
- EP-A2- 1 972 550
- WO-A1-2013/017603
- DE-A1-102012 001 054
- US-A- 4 828 285

## Beschreibung

Die vorliegende Erfindung betrifft eine Strebe für das Fahrwerk und vorzugsweise das Bugfahrwerk eines Flugzeugs sowie ein Verfahren zur Herstellung einer solchen Strebe.

Das Fahrwerk ist eine vitale und robuste Baugruppe des Flugzeugs, für die es keine Redundanz gibt. Um auch den Stoß einer sehr schlechten Landung klaglos und zuverlässig verkraften zu können, kommen beim Bau dieser technisch ausgefeilten Konstruktionen nur äußerst feste Komponenten und Werkstoffe zum Einsatz. Das Fahrwerk ist daher ein relativ schwerer Teil des Flugzeugs. Die Fahrwerke können beispielsweise bis zu 5% des Startgewichts eines Flugzeugs ausmachen.

Vor diesem Hintergrund ist es wünschenswert, die Konstruktion des Fahrwerks so zu optimieren, dass es Stöße zuverlässig verkraften kann und gleichzeitig kein zu großes Gewicht hat. Geeignete Fahrwerke mit Streben aus Faserverbundwerkstoffen sind beispielsweise aus der DE 10 2012 001 055 A1 und der DE 10 2012 001 054 A1 bekannt.

Ausgehend von diesem Stand der Technik ist es Aufgabe der Erfindung, eine verbesserte Strebe bereitzustellen, die noch robuster ist und zudem in einfacher Weise hergestellt werden kann.

Zur Lösung dieser Aufgabe stellt die Erfindung eine Strebe für das Fahrwerk und vorzugsweise das Bugfahrwerk eines Flugzeugs mit den Merkmalen des Anspruchs 1 bereit. Die Strebe umfasst ein Y-förmig verzweigtes Gerüst, wobei das Y-förmige Gerüst mehrteilig gefertigt ist und wenigstens zwei Balken umfasst, wobei ein erster Balken den ersten Ast des Gerüsts und ein zweiter Balken den zweiten Ast des Gerüsts bildet und wobei beide Balken teilweise oder vollständig aus einem Faserverbundwerkstoff bestehen.

Das Y-förmige Gerüst ist also nicht als einziges integrales Bauteil gefertigt sondern aus mindestens zwei getrennten Balken zusammengesetzt. Ein erster Balken bildet einen ersten Ast des Gerüsts und erstreckt sich nicht auf den zweiten Ast des Gerüsts. Ein zweiter Balken bildet einen zweiten Ast des Gerüsts und erstreckt sich nicht auf den ersten Ast des Gerüsts.

An den Ästen des Y-förmigen Gerüsts sind vorzugsweise Lagerstellen zur Fixierung der Strebe am Flugzeugrumpf vorgesehen. Die Anbindung am Flugzeugrumpf kann direkt oder vermittelst weiterer Zwischenstücke erfolgen. Beispielsweise sind an den Ästen zu diesem Zweck in der Ebene des Gerüsts liegende Löcher oder Achsstifte vorhanden.

Am Stamm des Y-förmigen Gerüsts sind Lagerstellen zur Fixierung weiterer Fahrwerksteile vorgesehen. Beispielsweise sind am Stamm zu diesem Zweck in der Ebene des Gerüsts liegende Löcher oder Achsstifte vorhanden.

In einer Ausführungsform sind die beiden Balken identisch oder nahezu identisch. Nahezu identisch soll heißen, dass die Formgebung grundsätzlich identisch ist, dass es aber Unterschiede in der Ausbildung der Verbindungspunkte geben kann. In einer Ausführungsform sind die beiden vorzugsweise identischen Balken im Gerüst linien- oder spiegelsymmetrisch zueinander angeordnet. Die Symmetrielinie entspricht der Stammachse. Die Spiegelebene steht senkrecht zur Ebene des Y-förmigen Gerüsts und liegt in der Stammachse. Eine identische Ausbildung der beiden Balken führt zu Vorteilen in der Produktion.

In einer Ausführungsform umfasst das Gerüst ferner wenigstens einen Quersteg, der sich zwischen den Ästen erstreckt. Der Quersteg kann wie auch die Balken teilweise oder vollständig aus einem Faserverbundwerkstoff bestehen.

Bei dem Quersteg handelt es sich vorzugsweise ebenfalls um ein individuelles Bauteil und nicht einen integralen Teil von einem der Balken. Der Quersteg kann gelenkig oder biegefrei an die Balken angebunden werden. Die Verbindung kann beispielsweise dadurch erfolgen, dass an den Verbindungspunkten zwischen Quersteg und Balken in beiden Bauteilen jeweils fluchtende Löcher vorgesehen sind, durch die ein Bolzen gesteckt wird. Die Löcher stehen in einer Ausführungsform normal zur Ebene des Gerüsts. Alternativ oder zusätzlich kann vorgesehen sein, dass die Anbindung über Lagerzapfen erfolgt, die auch der Anbindung der Strebe am Flugzeugrumpf dienen. Der Quersteg hat die Aufgabe, die Verwindungssteifigkeit des Gerüsts zu erhöhen.

Gattungsgemäß sind die beiden Balken am Verzweigungspunkt oder am Stamm des Y-förmigen Gerüsts miteinander verbunden. Die Verbindung am Verzweigungspunkt kann erfindungsgemäß anhand eines normal zur Ebene der Strebe verlaufenden Bolzens erfolgen. Die Verbindung kann selbstverständlich auch anhand mehrerer normal oder in der Ebene verlaufende Bolzen erfolgen.

Alternativ oder zusätzlich kann die Verbindung am Stamm anhand eines in der Ebene der Strebe verlaufenden Bolzens erfolgen.

Die Verbindung der beiden Balken am Verzweigungspunkt kann symmetrisch (beidseitig) oder asymmetrisch (einseitig) ausgeführt sein.

In einer Ausführungsform ist am Verzweigungspunkt zwischen den Balken ein Hilfskörper angeordnet, der zwei gegenüberliegende Sitzflächen umfasst, die an den Innenseiten der Balken anliegen. Der Hilfskörper kann wie auch die Balken teilweise oder vollständig aus einem Faserverbundwerkstoff bestehen. Der Hilfskörper dient als Abstandshalter und Mittel zur Festlegung des Abstands zwischen den Balken.

Vorzugsweise ist der Hilfskörper bezüglich der Stammachse spiegelsymmetrisch ausgebildet und angeordnet. Die Verbindung zwischen dem Hilfskörper und den Balken kann beispielsweise dadurch erfolgen, dass der Hilfskörper ein zu den Löchern der Balken fluchtendes Loch aufweist und der Bolzen, der die beiden Balken verbindet, auch durch dieses Loch gesteckt wird.

Der Hilfskörper kann beispielsweise als Platte mit dreieckiger oder trichterförmiger Gestalt ausgebildet sein, um mit den Sitzflächen den steigenden Abstand der Innenseiten der Balken und ggf. die Krümmung der Innenseiten der Balken am Verzweigungspunkt abzubilden. Die Sitzflächen können beispielsweise gegenüber der Stärke des Hilfskörpers erweitert sein, um eine größere Auflagefläche zu erreichen. In diesem Fall kann der Klemmkörper im Querschnitt beispielsweise H-förmig oder U-förmig sein. Der Hilfskörper kann dazu dienen, den Abstand zwischen den beiden Balken einzustellen und die Verwindungssteifigkeit der Strebe zu erhöhen.

In einer Ausführungsform weisen die Balken am Verzweigungspunkt eine nach innen offene Vertiefung auf. Es kann vorgesehen sein, dass in dieser Vertiefung, sofern vorhanden, der Hilfskörper aufgenommen ist.

Erfindungsgemäß ist der Stamm des Y-förmigen Gerüsts zweiteilig gefertigt, wobei der erste Balken den ersten Teil des Stamms und der zweite Balken den zweiten Teil des Stamms bildet.

In einer Ausführungsform sind die Balken S-förmig gekrümmt, wobei die Stammabschnitte beider Balken parallel verlaufen, die Balken sich dann im Bereich der Äste voneinander entfernen, und wobei an der Spitze der Äste ein Endabschnitt vorhanden ist, in dem die Balken wiederum parallel verlaufen.

Wie oben ausgeführt, bestehen die Balken teilweise oder vollständig aus einem Faserverbundwerkstoff. Denkbar ist es, einen Faser-Kunststoff-Verbund mit hoher spezifischer Festigkeit und Steifigkeit sowie niedriger Dichte einzusetzen. Dies wird beispielsweise dadurch erreicht, dass der Werkstoff aus langen oder endlos verlaufenden beanspruchungsgerecht orientierten Verstärkungsfasern besteht. In Betracht kommen beispielsweise Glasfasern, Aramidfasern oder Kohlenstofffasern. Diese sind vorzugsweise in eine thermo- oder duroplastische Kunststoffmatrix eingebaut. Besonders bevorzugt ist ein kohlenstofffaserverstärkter Kunststoff.

In einer Ausführungsform weist zumindest ein Bauteil der Strebe Verstärkungen aus Metall, Hartmetall, Keramik oder dergleichen auf. Beispielsweise kann vorgesehen sein, dass die Balken ringförmige Verstärkungen im Bereich der Löcher aufweisen, um eine Beschädigung des starren Faserverbundwerkstoffs zu vermeiden. Alternativ oder zusätzlich können auch die Löcher des Querstegs und/oder des Hilfskörpers ringförmige Verstärkungen im Bereich der Löcher aufweisen. Ferner kann vorgesehen sein, dass der Hilfskörper und/oder die Balken im Bereich der Sitzflächen eine Verstärkung aufweisen, um Beschädigungen zu vermeiden.

Die Balken und/oder der Quersteg können als Profilträger ausgeführt sein, um bei einer gleichbleibenden Stabilität eine geringere Masse zu haben. Ferner lassen sich Profilträger im Rahmen eines weiter unten beschriebenen erfindungsgemäßen Verfahrens in einfacher Weise herstellen. Beispiele für geeignete Profile umfassen Rund- oder Mehrkantrohre, beispielsweise Vierkantrohre U-Profile, T-Profile, Doppel-T-Profile oder L-Profile.

Die Erfindung betrifft ferner ein Verfahren zur Herstellung einer Strebe nach einem der Vorrichtungsansprüche, wobei die Herstellung der Balken im Rahmen eines RTM-Verfahrens (RTM steht für Resin Tranfer Moulding) erfolgt und wobei die fertigen Balken anschließend miteinander verbunden werden.

Dabei wird ein Faserhalbzeug in eine Kavität eingelegt, das Faserhalbzeug anschließend mit einer Formmasse umspritzt und das entstehende Verbundbauteil unter Wärme und Druck ausgehärtet. Bei der Formmasse kann es sich beispielsweise um eine vernetzbare Kunststoffmasse handeln, die zu einem Duroplasten aushärtet. Das Faserhalbzeug kann Kohlefasern umfassen oder daraus bestehen. Vor dem Einspritzen der Formmasse kann die Kavität evakuiert werden. Sofern das Bauteil auch Verstärkungen umfassen soll, beispielsweise Ringverstärkungen im Bereich der Löcher oder Verstärkungen im Bereich der Kontaktflächen mit dem Hilfskörper, können entsprechende Teile wie beispielsweise Metallteile in die Kavität eingelegt werden.

Die Löcher können in die Bauteile bereits beim RTM-Verfahren oder nachträglich eingearbeitet werden, beispielsweise durch Bohren.

Alternativ zum RTM-Verfahren, also einem Vakuuminfusionsverfahren, kann die Herstellung der Balken im Rahmen eines weiteren erfindungsgemäßen Verfahrens auch durch thermoplastische Herstellung im Rahmen eines automatisierten Bandlaminierungsverfahrens (ATL; Automated Tape Laying) erfolgen.

Auch der teilweise oder vollständig aus einem Faserverbundwerkstoff bestehende Quersteg und/oder der teilweise oder vollständig aus einem Faserverbundwerkstoff bestehende Hilfskörper können in identischer Weise im Rahmen eines RTM-Verfahrens oder automatisierten Bandlaminierungsverfahrens hergestellt werden und anschließend mit den Balken verbunden werden.

Die Verbindung der einzelnen Teile kann durch Verbolzen an den Löchern erfolgen.

Weiterhin offenbart sind ein Flugzeugfahrwerk und vorzugsweise ein Bugfahrwerk mit einer erfindungsgemäßen Strebe sowie ein Verfahren zur Herstellung eines derartigen Fahrwerks umfassend die erfindungsgemäße Herstellung einer Strebe und die Verbauung einer derartigen Strebe.

Weitere Einzelheiten und Vorteile ergeben sich aus dem im Folgenden anhand der Figuren diskutierten Ausführungsbeispiel. In den Figuren zeigen:
- Figur 1:: ein Bugfahrwerk eines Flugzeugs umfassend eine gattungsgemäße Strebe aus dem Stand der Technik;
- Figur 2:: verschiedene Ansichten einer ersten Ausführungsform einer erfindungsgemäßen Strebe;
- Figur 3:: verschiedene Ansichten einer ersten Ausführungsform einer erfindungsgemäßen Strebe; und
- Figur 4:: verschiedene Ansichten einer ersten Ausführungsform einer erfindungsgemäßen Strebe.

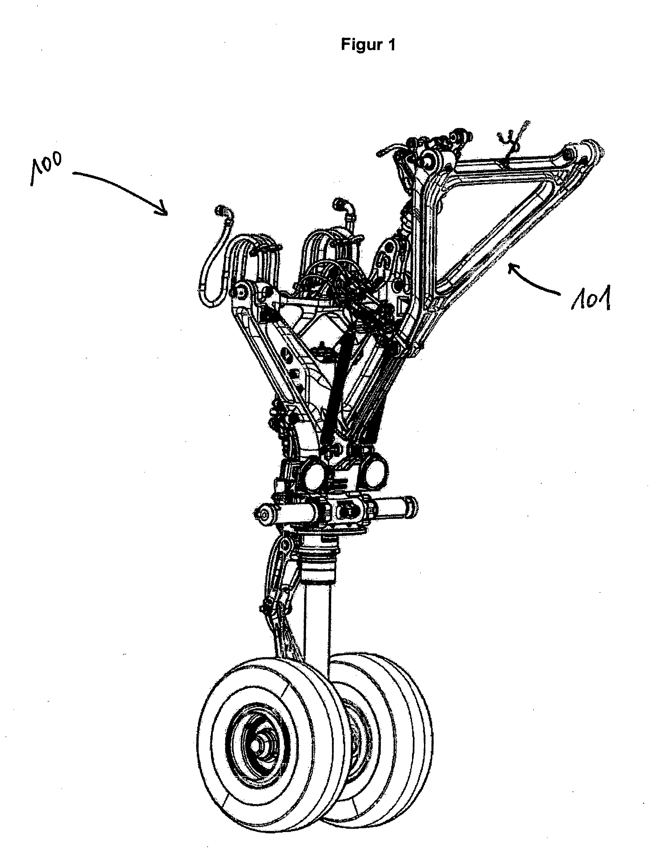

Figur 1 zeigt ein Bugfahrwerk 100 eines Flugzeugs umfassend eine gattungsgemäße, jedoch nicht erfindungsgemäße Y-förmige Strebe 101. Die beiden Äste der Strebe 101 sind jeweils mit der Flugzeugkarosserie verbunden und der Stamm der Strebe ist mit weiteren Elementen des Bugfahrwerks 100 verbunden. Die Y-förmige Strebe der vorliegenden Erfindung ist geeignet, die in Figur 1 gezeigte Strebe aus dem Stand der Technik zu ersetzen.

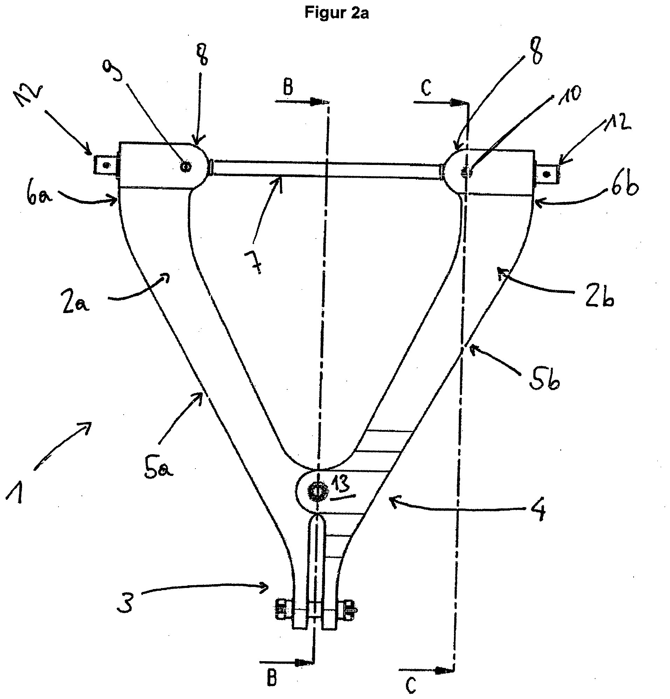

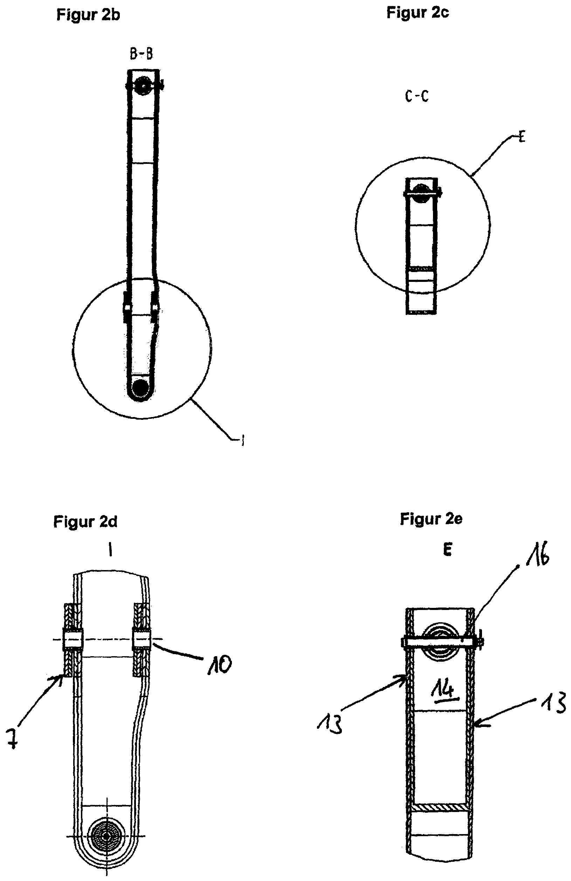

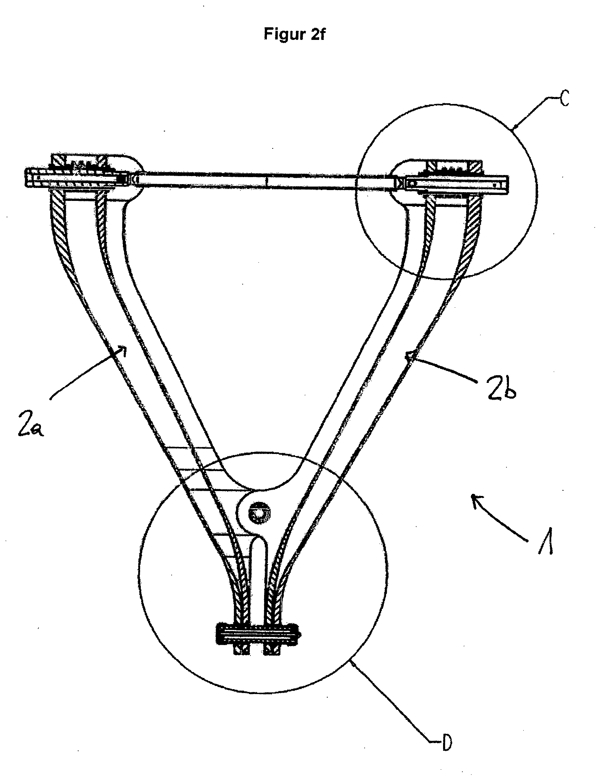

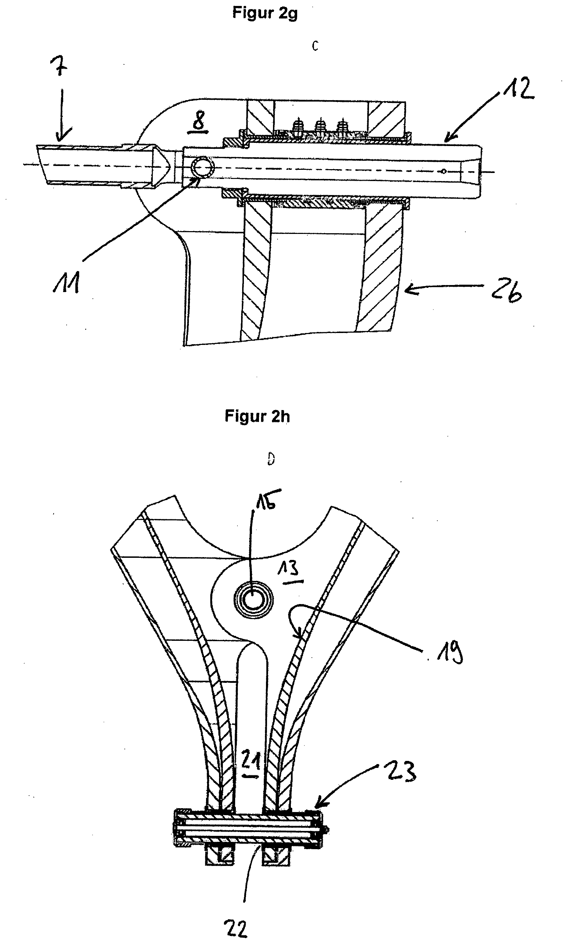

Figur 2 zeigt mehrere Ansichten einer ersten Ausführungsform einer erfindungsgemäßen Y-förmigen Strebe. In Figur 2a wird eine Draufsicht gezeigt. In Figuren 2b und 2c werden Schnittansichten B-B bzw. C-C gemäß der Definition aus Figur 2a gezeigt. In Figuren 2d und 2e werden Detailansichten I bzw. E gemäß der Definition aus Figuren 2b und 2c gezeigt. In Figur 2f wird ein Schnitt in der Ebene der Strebe gezeigt. In Figuren 2g und 2h werden Detailansichten C bzw. D gemäß der Definition aus Figur 2f gezeigt.

Die Strebe gemäß der in Figur 2 gezeigten Ausführungsform umfasst ein Y-förmiges Gerüst 1 mit spiegelverkehrt angeordneten Balken 2a und 2b. Die Balken sind identisch und liniensymmetrisch angeordnet.

Die Balken 2a und 2b sind leicht S-förmig gekrümmt. Sie weisen einen ersten geraden Abschnitt auf, in dem die Balken parallel verlaufen und den Stamm 3 des Gerüsts bilden. An den ersten geraden Abschnitt schließt ein erster gekrümmter Abschnitt an, der den Verzweigungspunkt 4 des Gerüsts definiert. An den ersten gekrümmten Abschnitt schließt ein zweiter gerader Abschnitt an, der die Äste 5a und 5b des Gerüsts definiert. An den zweiten geraden Abschnitt schließt ein zweiter gekrümmter Abschnitt auf, der so ausgebildet ist, dass daran anschließende Fortsätze 6a bzw. 6b beider Balken 2a und 2b, die den Endbereich der Äste 5a bzw. 5b bilden, wider parallel zueinander stehen.

Im Bereich der Äste 5a und 5b sind die Balken 2a und 2b als Vierkantrohr ausgeführt, wobei diese jeweils aus 2 U- oder C-Profilen zusammengesetzt sind, und im Bereich des Stamms 3 als senkrecht zur Ebene des Gerüsts stehendes I-Profil.

Das Y-förmige Gerüst 1 umfasst ferner einen Quersteg 7, der sich im Bereich der Fortsätze 6a und 6b zwischen den Ästen 5a und 5b erstreckt. Der Quersteg 7 ist als Rohrprofil ausgeführt, dessen beide Enden an in der Ebene des Gerüsts liegenden Stegen 8 der Fortsätze 6a und 6b fixiert sind. Die Stege 8 und die Enden des Querstegs 7 weisen normal zur Ebene des Y-förmigen Gerüsts 1 verlaufende Löcher 9 und 10 auf, durch die zur Verbindung der Balken 2a bzw. 2b mit dem Quersteg 7 Bolzen 11 gesteckt werden.

An den Fortsätzen 6a und 6b der Balken 2a und 2b sind ferner in der Ebene des Y-förmigen Gerüsts 1 verlaufende Lagerstifte 12 zur schwenkbaren Anbindung der Strebe an einen Flugzeugrumpf aufgenommen. Diese Lagerstifte haben an deren Innenseite ebenfalls Normalbohrungen und sind anhand des Bolzens 11 mit der Querstrebe 7 verbunden.

Am Verzweigungspunkt 4 des Y-förmigen Gerüsts sind die Balken 2a und 2b miteinander verbunden. Zu diesem Zweck weisen beide Balken 2a und 2b im Bereich des ersten gekrümmten Abschnitts zwei zueinander zeigende Stege 13 auf, zwischen denen eine Aufnahme 14 gebildet wird. Die Stege 13 der Balken 2a und 2b sind an dieser Stelle leicht zueinander versetzt, wie sich dies beispielsweise der Figur 2d entnehmen lässt. Dies kann dadurch erreicht werden, dass in den identischen Balken 2a und 2b die Stege 13 leicht aus der Oberfläche des Profils versetzt werden und somit bei einer spiegelbildlichen Anordnung der Balken 2a und 2b ineinandergreifen. Die Stege 13 weisen normal zur Ebene des Y-förmigen Gerüsts 1 verlaufende Löcher 15 auf, durch die zur Verbindung der Balken 2a und 2b Bolzen 16 gesteckt werden.

In der Aufnahme 14 des männlichen Balkens 2b kann ein in den Figuren nicht näher dargestellter Hilfskörper angeordnet sein, der zwei gegenüberliegende Sitzflächen umfassen kann, die an den Innenseiten 19 der Balken 2a und 2b im ersten gekrümmten Bereich anliegen können. Der Hilfskörper kann bezüglich der Stammachse spiegelsymmetrisch ausgebildet sein und angeordnet werden. An der Symmetrieachse kann der Hilfskörper ein normal zur Ebene des Gerüsts 1 verlaufendes Loch aufweisen, welches mit den Löchern 15 fluchten kann und durch das der Bolzen 16 zur Verbindung des Hilfskörpers mit den Balken 2a und 2b gesteckt werden kann.

Der Hilfskörper kann beispielsweise die Gestalt einer trichterförmigen Platte annehmen, sodass dessen Sitzflächen vollflächig an den Innenseiten 19 der Balken 2a und 2b am Verzweigungspunkt anliegen können. Im Querschnitt kann der Hilfskörper beispielsweise H-förmig sein, sodass die Stärke der Platte im Bereich der Sitzflächen zunimmt, um eine größere Auflagefläche zu erreichen. Eine den Bolzen 16 umgreifende Hülse kann in diesem Fall zum Ausgleich der Höhendifferenz zwischen dem Hilfskörper und der Aufnahme 14 dienen.

Im Bereich des Stamms 3 des Gerüsts 1 verlaufen die Balken 2a und 2b parallel zueinander und in einem Abstand zueinander, der eine Zwischenraum 21 freilässt. Am Ende des Stamms 3 sind in beiden Balken 2a und 2b horizontale und in der Ebene des Gerüsts 1 verlaufende Löcher 22 eingearbeitet, die zur Aufnahme eines Stiftes 23 zur Verbindung mit einem weiteren Bauteil des Bugfahrwerks eingearbeitet.

Bei beiden Balken 2a und 2b, dem Quersteg 7 und ggf. dem Hilfskörper handelt es sich um Bauteile aus Faserverbundmaterial, vorzugsweise aus CFK, die anhand eines RTM-Verfahrens automatisierten Bandlaminierungsverfahrens hergestellt wurden. Alle Löcher in diesen Bauteilen sind mit Metallringen ausgekleidet.

Das Y-förmige Gerüst 1 ist also nicht als einziges integrales Bauteil gefertigt, sondern umfasst mehrere getrennte und mechanisch verbundene Bauteile, nämlich die Balken 2a und 2b, den Quersteg 7 und ggf. den Hilfskörper. Ein Balken 2a bildet den ersten Ast 5a und der andere Balken 2b den zweiten Ast 5b des Gerüsts 1.

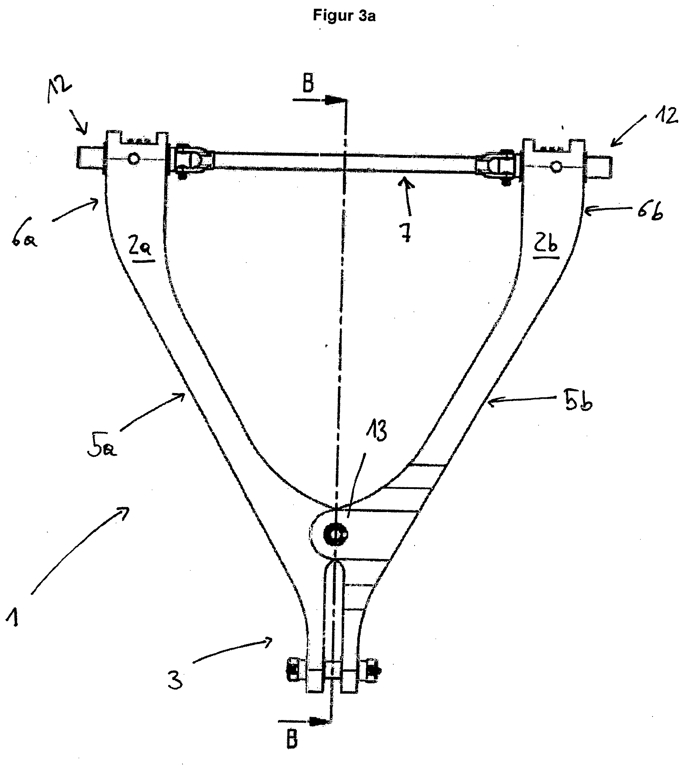

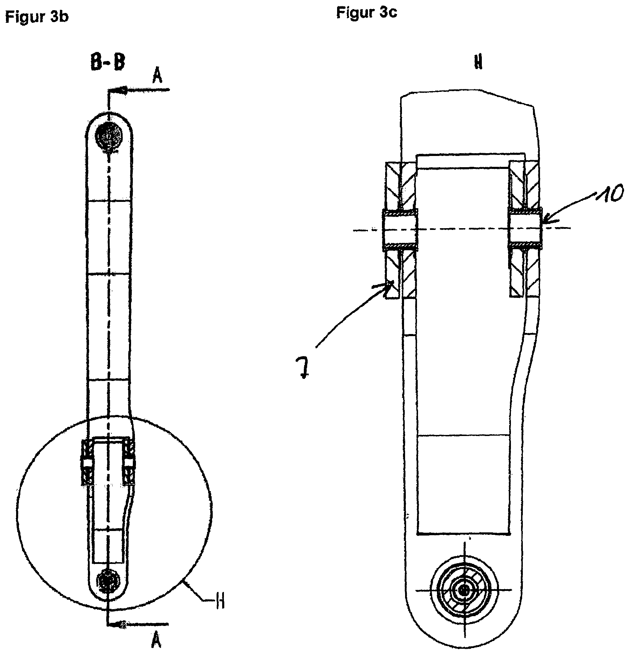

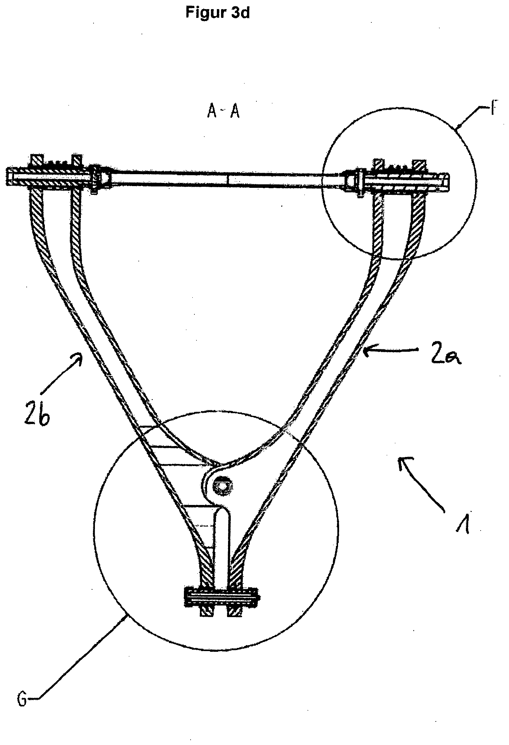

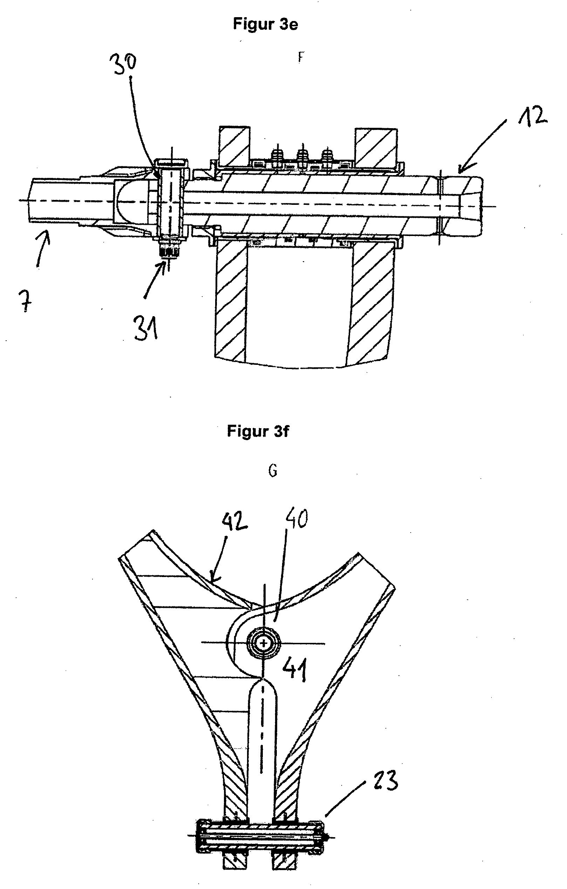

Figur 3 zeigt mehrere Ansichten einer zweiten Ausführungsform einer erfindungsgemäßen Y-förmigen Strebe. In Figur 3a wird eine Draufsicht gezeigt. In Figur 3b wird eine Schnittansicht B-B gemäß der Definition aus Figur 3a gezeigt. In Figur 3c wird eine Detailansicht H gemäß der Definition aus Figur 3b gezeigt. In Figur 3d wird eine Schnittansicht A-A gemäß der Definition aus Figur 3b gezeigt. In Figuren 3e und 3f werden Detailansichten F bzw. G gemäß der Definition aus Figur 3d gezeigt. Im Folgenden werden lediglich Unterschiede zur Ausführungsform gemäß Figur 2 diskutiert. Zu der Strebe gemäß Figur 2 korrespondierende Teile sind mit identischen Bezugszeichen versehen.

Ein Unterschied gegenüber der Ausführungsform gemäß Figur 2 besteht in der Anbindung des Querstegs 7 an den Balken 2a und 2b. Wie dies insbesondere aus der Figur 3e ersichtlich wird, erfolgt lediglich eine indirekte Anbindung des Querstegs 7 an die Balken 2a bzw. 2b, und zwar anhand des Stiftes 12. Die in der Ausführungsform gemäß Figur 2 vorhandenen Stege 8 fehlen ebenso wie die Normallöcher 9 und 10 und der Normalbolzen 11. Stattdessen weisen die Querstrebe 7 an beiden Enden und die Lagerstifte 12 an deren Innenseiten jeweils korrespondierende, in der Ebene der Strebe 1 liegende Querbohrungen 30 auf. Durch diese Querbohrungen 30 sind Bolzen 31 zur Verbindung der Lagerstifte 12 mit der Querstebe 7 gesteckt.

Ein weiterer Unterschied gegenüber der Ausführungsform gemäß Figur 2 besteht in der Ausbildung des Verzweigungspunkts 4, wie dies insbesondere aus der Figur 3f ersichtlich ist. An Stelle der Fortsätze 13 ist dort eine Ausformung 40 der profilförmigen Balken 2a bzw. 2b vorgesehen Die vertikalen Profilwände 42 umschließen einen Zwischenraum 41, der an die Stelle der Aufnahme 14 tritt.

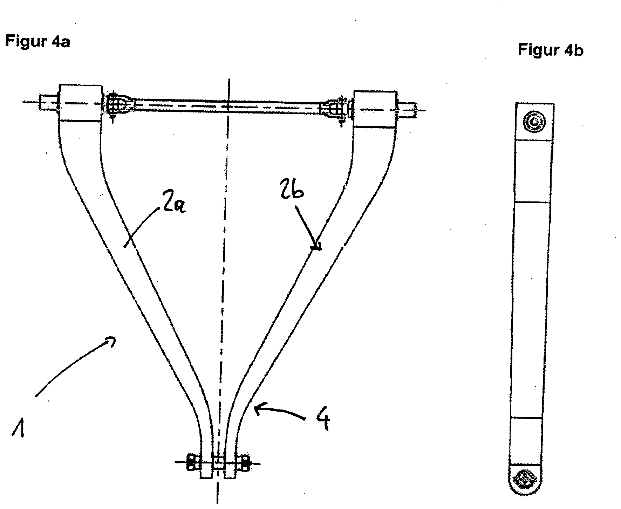

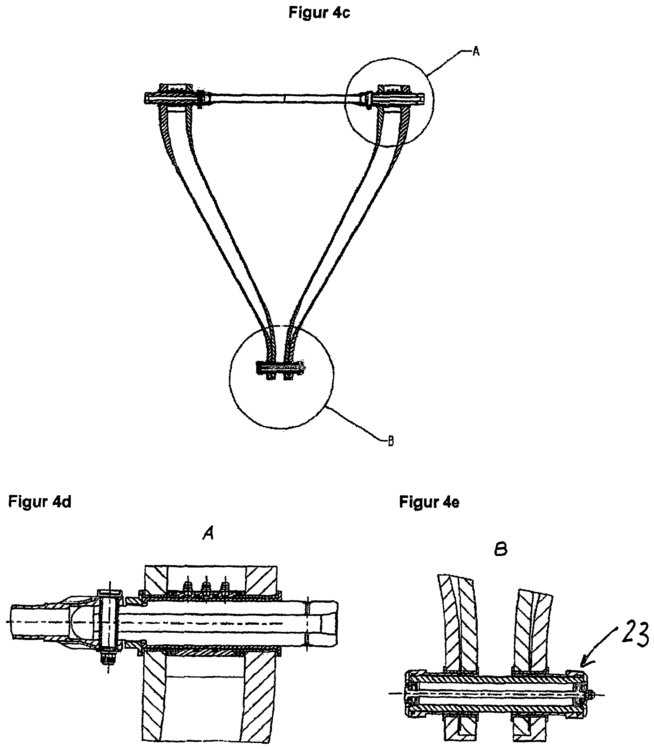

Figur 4 zeigt mehrere Ansichten einer dritten Ausführungsform einer erfindungsgemäßen Y-förmigen Strebe. In Figur 4a wird eine Draufsicht gezeigt. In Figur 4b wird eine Seitenansicht gezeigt. In Figur 4c wird ein Schnitt in der Ebene der Strebe gezeigt. In Figuren 4d und 4e werden Detailansichten A bzw. B gemäß der Definition aus Figur 4c gezeigt. Im Folgenden werden lediglich Unterschiede zur Ausführungsform gemäß Figur 3 diskutiert. Zu den Streben gemäß Figuren 2 und 3 korrespondierende Teile sind mit identischen Bezugszeichen versehen.

Ein Unterschied gegenüber der Ausführungsform gemäß Figur 3 besteht in der Ausbildung des Verzweigungspunkts 4, wie dies insbesondere aus der Figuren 4a, 4c und 4e ersichtlich ist. In dieser Ausführungsform fehlt eine Verbindung der Balken 2a und 2b am Verzweigungspunkt. Die beiden Balken 2a und 2b sind lediglich am Ende der Äste anhand der Querstrebe 7 und am Ende des Stammes anhand des Stiftes 23 verbunden. Entsprechend sind die Balken 2a und 2b als durchgehende Profile ohne Fortsätze 13 oder Ausformungen 40 im Bereich des Verzweigungspunktes ausgebildet. Die Liniensymmetrie der Balken 2a und 2b entspricht in diesem Fall einer Spiegelsymmetrie.

Zusammenfassend ergibt sich, dass das erfindungsgemäße Konzept einer mehrteiligen Fahrwerksstrebe und vorzugsweise Bugfahrwerkstrebe aus Faserverbundmaterial und vorzugsweise CFK als Basis dienen kann, um den Materialeinsatz so gering wie möglich zu halten und um vollautomatisierte Fertigungsverfahren zu unterstützen. Dies führt zu einer verbesserten Wirtschaftlichkeit. Basierend auf zwei ggf. symmetrischen Balken und einem quer verlaufenden Quersteg können die simplifizierten Einzelteile im Gegensatz zu bekannten Y-Streben mit geringem Materialverschnitt und ohne großen manuellen Drapieraufwand hergestellt werden. Es kann eine einfache RTM-Form verwendet werden, es ist lediglich eine geringe maschinelle Nachbearbeitung erforderlich und es kann ein hoher Automatisierungsgrad erreicht werden. Die Verwendung zweier getrennter Balken verhindert eine Beschädigung der Strebe durch beispielsweise Delaminationen und Faserbrüche aufgrund hoher Spannungen und Scherkräfte im Verzweigungspunkt bzw. Kniebereich. Im Schadensfall oder im Falle eines Produktionsfehlers muss nur das betroffene Einzelteil ersetzt werden und die anderen Teile können weiterverwendet werden. Die Montage von Achsstiften an den Ästen des Y-förmigen Gerüsts kann von innen nach außen erfolgen, da der Quersteg nach der Installation der Achsstifte montiert werden kann.

## Patentansprüche

1. Strebe für das Fahrwerk und vorzugsweise das Bugfahrwerk eines Flugzeugs, die ein Y-förmig verzweigtes Gerüst (1) mit einem Stamm (3), einem Verzweigungspunkt (4) und zwei Ästen (5a, 5b) umfasst, wobei das Y-förmige Gerüst (1) mehrteilig gefertigt ist und wenigstens zwei Balken (2a, 2b) umfasst, wobei ein erster Balken (2a) den ersten Ast (5a) des Gerüsts (1) und ein zweiter Balken (2b) den zweiten Ast (5b) des Gerüsts (1) bildet und wobei beide Balken (2a, 2b) teilweise oder vollständig aus einem Faserverbundwerkstoff bestehen, und wobei die beiden Balken (2a, 2b) am Verzweigungspunkt (4) oder am Stamm (3) des Y-förmigen Gerüsts (1) miteinander anhand eines Bolzens (11) verbunden sind,
**dadurch gekennzeichnet, dass**
der Bolzen (11) normal zur Ebene der Strebe und/oder horizontal und in der Ebene der Strebe verläuft und
der Stamm (3) des Y-förmigen Gerüsts (1) zweiteilig gefertigt ist, wobei der erste Balken (2a) den ersten Teil des Stamms (3) und der zweite Balken (2b) den zweiten Teil des Stamms (3) bildet.

2. Strebe nach Anspruch 1, **dadurch gekennzeichnet, dass** die beiden Balken (2a, 2b) identisch ausgebildet sind und/oder dass die Balken (2a, 2b) linien- oder spiegelsymmetrisch zueinander angeordnet sind.

3. Strebe nach einem der vorhergehenden Ansprüche, **dadurch gekennzeichnet, dass** das Gerüst (1) ferner wenigstens einen Quersteg (7) umfasst, der sich zwischen den Ästen (5a, 5b) erstreckt und vorzugsweise teilweise oder vollständig aus einem Faserverbundwerkstoff besteht..

4. Strebe nach Anspruch 1, **dadurch gekennzeichnet, dass** die Balken (2a, 2b) am Verzweigungspunkt (4) des Gerüsts (1) normal zur Ebene des Gerüsts (1) oder in der Ebene des Gerüsts (1) verlaufende Löcher (15) aufweisen, durch die die Bolzen (16) gesteckt werden.

5. Strebe nach einem der vorhergehenden Ansprüche, **dadurch gekennzeichnet, dass** am Verzweigungspunkt (4) zwischen den Balken (2a, 2b) ein Hilfskörper angeordnet ist, der zwei gegenüberliegende Sitzflächen umfasst, die an den Innenseiten der Balken (2a, 2b) anliegen, wobei vorzugsweise vorgesehen ist, dass der Hilfskörper teilweise oder vollständig aus einem Faserverbundwerkstoff besteht.

6. Strebe nach einem der vorhergehenden Ansprüche, **dadurch gekennzeichnet, dass** die Balken (2a, 2b) am Verzweigungspunkt (4) eine nach innen offene Vertiefung aufweisen, wobei in dieser Vertiefung vorzugsweise der Hilfskörper aufgenommen ist.

7. Strebe nach einem der vorhergehenden Ansprüche, **dadurch gekennzeichnet, dass** die Balken (2a, 2b) und vorzugsweise ferner der Quersteg (7) und/oder der Hilfskörper teilweise oder vollständig aus kohlenstofffaserverstärktem Kunststoff bestehen.

8. Verfahren zur Herstellung einer Strebe nach einem der vorhergehenden Ansprüche,
**dadurch gekennzeichnet,**
**dass** die Herstellung der Balken (2a, 2b) im Rahmen eines Spritzpressverfahrens oder im Rahmen eines automatischen Bandlegeverfahrens erfolgt und dass die fertigen Balken (2a, 2b) anschließend miteinander dadurch verbunden werden, dass die beiden Balken (2a, 2b) am Verzweigungspunkt (4) oder am Stamm (3) des Y-förmigen Gerüsts (1) anhand eines normal zur Ebene der Strebe verlaufenden Bolzens (11) und/oder anhand eines horizontal und in der Ebene der Strebe verlaufenden Bolzens (11) miteinander verbunden werden und dass der Stamm (3) des Y-förmigen Gerüsts (1) zweiteilig gefertigt wird, wobei der erste Balken (2a) den ersten Teil des Stamms (3) und der zweite Balken (2b) den zweiten Teil des Stamms (3) bildet.

## Claims

1. A strut for the landing gear and preferably for the nose landing gear of an aircraft, said strut comprising a structure (1) branched in a Y shape having a trunk (3) and two branches (5a, 5b) wherein the Y-shaped structure (1) is produced in multiple parts and comprises at least two bars (2a, 2b), wherein a first bar (2a) forms the first branch (5a) of the structure (1) and a second bar (2b) forms the second branch (2b) of the structure (1), and wherein both bars (2a, 2b) partly or completely comprise a fiber composite material, and wherein the two bars (2a, 2b) are connected to one another at the branching point (4) or at the trunk (3) of the Y-shaped structure (1) using a bolt (11), **characterized in that** the bolt (11) extends normal to the plane of the strut and/or horizontally and in the plane of the strut; and
**in that** the trunk (3) of the Y-shaped structure (1) is produced in two parts, with the first bar (2a) forming the first part of the trunk (3) and the second bar (2b) forming the second part of the trunk (3).

2. A strut in accordance with claim 1, **characterized in that** the two bars (2a, 2b) are identical; and/or **in that** the bars (2a, 2b) are arranged in linear symmetry or mirror symmetry with respect to one another.

3. A strut in accordance with one of the preceding claims, **characterized in that** the structure (1) furthermore comprises at least one cross web (7) that extends between the branches (5a, 5b) and preferably partly or completely comprises a fiber composite material.

4. A strut in accordance with claim 1, **characterized in that** the bars (2a, 2b) have holes (15) at the branching point (4) of the structure (1) which extend normal to the plane of the structure (1) or in the plane of the structure (1) and through which the bolts (16) are inserted.

5. A strut in accordance with one of the preceding claims, **characterized in that** an auxiliary body is arranged at the branching point (4) between the bars (2a, 2b) and comprises two oppositely disposed bearing surfaces that contact the inner sides of the bars (2a, 2b), with provision preferably being made that the auxiliary body partly or completely comprises a fiber composite material.

6. A strut in accordance with one of the preceding claims, **characterized in that** the bars (2a, 2b) have an inwardly open recess at the branching point (4), with the auxiliary body preferably being received in this recess.

7. A strut in accordance with one of the preceding claims, **characterized in that** the bars (2a, 2b) and preferably furthermore the cross web (7) and/or the auxiliary body partly or completely comprise carbon fiber reinforced plastic.

8. A method of manufacturing a strut in accordance with one of the preceding claims,
**characterized in that**
the manufacture of the bars (2a, 2b) takes place as part of an injection molding process or as part of an automatic tape laying process; and **in that** the completed bars (2a, 2b) are subsequently connected to one another, **in that** the two bars (2a, 2b) are connected to one another at the branching point (4) or at the trunk (3) of the Y-shaped structure (1) using a bolt (11) that extends normal to the plane of the strut and/or using a bolt (11) that extends horizontally and in the plane of the strut; and **in that** that the trunk (3) of the Y-shaped structure (1) is produced in two parts, with the first bar (2a) forming the first part of the trunk (3) and the second bar (2b) forming the second part of the trunk (3).

## Revendications

1. Montant destiné au train d'atterrissage et de préférence au train d'atterrissage avant d'un aéronef, qui comprend un cadre (1) ramifié en forme de Y pourvu d'un tronc (3), d'un point de ramification (4) et de deux branches (5a, 5b), le cadre (1) en forme de Y étant fabriqué en plusieurs parties et comprenant au moins deux poutres (2a, 2b), une première poutre (2a) formant la première branche (5a) du cadre (1) et une seconde poutre (2b) formant la seconde branche (5b) du cadre (1) et les deux poutres (2a, 2b) étant partiellement ou entièrement constituées d'un matériau composite renforcé par des fibres et les deux poutres (2a, 2b) étant reliées l'une à l'autre au niveau du point de ramification (4) ou au niveau du tronc (3) du cadre (1) en forme de Y à l'aide d'un boulon (11),
**caractérisé en ce que**
le boulon (11) s'étend perpendiculairement au plan du montant et/ou horizontalement et dans le plan du montant et le tronc (3) du cadre (1) en forme de Y est fabriqué en deux parties, la première poutre (2a) formant la première partie du tronc (3) et la seconde poutre (2b) formant la seconde partie du tronc (3).

2. Montant selon la revendication 1, **caractérisé en ce que** les deux poutres (2a, 2b) sont réalisées identiques et/ou **en ce que** les poutres (2a, 2b) sont disposées l'une par rapport à l'autre avec une symétrie orthogonale par rapport à une droite ou par rapport à un plan.

3. Montant selon l'une des revendications précédentes, **caractérisé en ce que** le cadre (1) comprend en outre au moins une entretoise (7), qui s'étend entre les branches (5a, 5b) et qui est de préférence partiellement ou entièrement constituée d'un matériau composite renforcé par des fibres.

4. Montant selon la revendication 1, **caractérisé en ce que** les poutres (2a, 2b) comportent des trous (15) s'étendant perpendiculairement au plan du cadre (1) ou dans le plan du cadre (1) au niveau du point de ramification (4) du cadre (1), à travers lesquels passent les boulons (16).

5. Montant selon l'une des revendications précédentes, **caractérisé en ce qu'**un corps auxiliaire est disposé au niveau du point de ramification (4) entre les poutres (2a, 2b), ledit corps auxiliaire comprenant deux surfaces d'appui opposées, qui s'appliquent contre les côtés intérieurs des poutres (2a, 2b), dans lequel il est de préférence prévu que le corps auxiliaire soit partiellement ou entièrement constitué d'un matériau composite renforcé par des fibres.

6. Montant selon l'une des revendications précédentes, **caractérisé en ce que** les poutres (2a, 2b) comportent un creux ouvert vers l'intérieur au niveau du point de ramification (4), le corps auxiliaire étant de préférence reçu dans ce creux.

7. Montant selon l'une des revendications précédentes, **caractérisé en ce que** les poutres (2a, 2b) et de préférence en outre l'entretoise (7) et/ou le corps auxiliaire sont partiellement ou entièrement constitués de matière plastique renforcée par des fibres de carbone.

8. Procédé de fabrication d'un montant selon l'une des revendications précédentes,
**caractérisé en ce que**
la fabrication des poutres (2a, 2b) est effectuée dans le cadre d'un procédé de moulage par transfert ou dans le cadre d'un procédé d'application automatique de rubans et **en ce que** les poutres (2a, 2b) finies sont ensuite reliées l'une à l'autre en reliant les deux poutres (2a, 2b) l'une à l'autre au niveau du point de ramification (4) ou du tronc (3) du cadre (1) en forme de Y à l'aide d'un boulon (11) s'étendant perpendiculairement au plan du montant et/ou à l'aide d'un boulon (11) s'étendant horizontalement et dans le plan du montant et **en ce que** le tronc (3) du cadre (1) en forme de Y est fabriqué en deux parties, la première poutre (2a) formant la première partie du tronc (3) et la seconde poutre (2b) formant la seconde partie du tronc (3).
